# EUROPEAN PATENT SPECIFICATION

(11) **EP 0 816 035 B1**
(45) Date of publication and mention of the grant of the patent: **04.06.2003**
(21) Application number: 95923614.2
(22) Date of filing: 16.03.1995
(51) Int. Cl.: B29B 17/00, C08J 11/10

(54) **METHOD OF REPROCESSING INDUSTRIAL RUBBER ARTICLES**
VERFAHREN ZUM WIEDERVERWENDEN VON INDUSTRIELLEN GUMMIGEGENSTÄNDEN
PROCEDE DE RECYCLAGE D'ARTICLES EN CAOUTCHOUC INDUSTRIEL

(43) Date of publication of application: 07.01.1998
(73) Proprietor: OK TECH Inc., Wilmington, DE 19810 (US)
(72) Inventor: Ryazanov, Alexandr, Vasilievich, Troitsk, 142092 (RU); Danschikov, Evgeny, Vladimirovich, Troisk, 142092 (RU); Luchnik, Igor, Nikolaevich, Moscow, 113149 (RU); Chuiko, Sergei, Vasilievich, Moscow, 117261 (RU)
(74) Representative: Zellentin, Rüdiger, Dr.
(86) International application number: RU9500048
(87) International publication number: WO96028291

(56) References cited:
- DE-A- 3 838 188
- DE-A- 3 924 145
- DE-A- 4 029 879
- FR-A- 2 643 011
- FR-A- 2 685 339
- GB-A- 2 070 623
- SU-A- 1 685 721
- US-A- 1 851 694
- US-A- 5 264 640
- DATABASE WPI Section Ch, Week 7913 Derwent Publications Ltd., London, GB; Class AP, AN 79-25178B (13) XP002059266 & JP 51 023 855 A (SHIN MEIWA IND. CO. LTD.) , 26 February 1976
- DATABASE WPI Section Ch, Week 7843 Derwent Publications Ltd., London, GB; Class AP, AN 78-77639A (43) XP002059267 & JP 51 024 972 A (SHIN MEIWA IND. CO. LTD.) , 28 February 1976

## Description

The invention relates to the disposal and recycling of scrap or used rubber products, for example, spent tires, conveyor belts, wastes of production of rubber pipes, driving belts etc.

Used rubber products represent the major part of human activity products created a considerable pollution problem. Due to their high tolerance for natural factors these products is defined as strong and prolonged sources of environmental pollution.

It is known that the most serious problem is the disposal of spent tires whose stockpiles create a global environmental problem. Only a small portion of spent tires is disposed and the plenty of scrap tires litters the landscape, dumped in land-fills or ocean off-shore. According to US Environmental Protection Agency data over 3 billion spent rubber tires are dumped only in the United States ( Tire Review, 1991, v.91, n.4, p.35 ). The processing and the recycling of tires reinforced by steel wires (metal cord) is the most difficult problem; such tires practically aren't processed by available equipment.

Dump fires resulted in the strong environmental pollution are very difficult to put out. Fires in large underground burying may be cause of an overall ecological catastrophe. Another serious problem is that tire dumps serve as fertile breeding grounds for spreader of disease causing an epidemics in surrounding regions.

The problem of the disposal of scrap and used rubber products comprises two tasks. The first is pollution free destruction of these products and the second is high efficient usage of their valuable material. From the standpoint of conservation of natural resources in the conditions of rising their deficiency the recycling of waste materials presents an important problem. Used rubber products including spent tires presented more then 90% of these products and form the significant source of secondary stock materials.

Economical expediency of recycling of used rubber products is determined by their ability to retain properties of material that permits to use waste rubber products in producing new constructive and technological materials. Therefore, processing of scrap rubber products not only reduces an environmental pollution, but also permits to recycle the valuable materials. For example, rubber crumb which can be obtained by processing of used rubber products are effectively used in the tire industry, in the production of other rubber products, in the road industry as well as in the production of corrosion-preventive, road-making, structural and heat-insulation materials.

So, the development of methods for processing of rubber products is urgent and very important problem.

The simplest method for disposal of rubber wastes particularly widely used for tire disposal is the combustion. Before burning tires are usually shredded and mixtured with an inflammable wastes to provide the more effective combustion ( U.S.Patent No. 4.142.688 issued 1979 to A.O.Johnson et al.). The non-reproducibility of natural resources forces to look for the ways of more profitable usage of this value material then the combustion.

Another common industrial method is the regeneration of scrap rubber products. It presents the production of new moldable product by using vulcanization of shredded scrap products free from reinforcing materials. This method involves the prior destruction of rubber products and removing contamination of reinforcement elements. The regeneration also has its own serious pollution problems.

One of the methods for disposal of scrap or used rubber products is pyrolysis which allows to transform tire rubber to a carbon black and a variety of gaseous and liquid organic compounds which can be used in chemical industry and energetics. Pyrolysis usually also requires the previous destruction and shredding of rubber products ( U.S. Patent No. 4.839.151 issued 1989 to F.Apffel ). Weakness of pyrolysis is low industrial usage of its products that permits to dispose only a small part of scrap tires. It's necessary to note also high energy consumption of the process (more then I kWh/kg) due to the high temperature of the process.

An efficient direction for processing of rubber products is the recovery of rubber crumb and metal and fabric reinforcement elements from rubber wastes. Complete separation of these materials is a difficult technological problem not solved up-to-day by economically efficient way. By this reason the extent of this process is too small for processing significant part of rubber wastes.

The rubber products processing and rubber crumb producing involves, as a rule, the following general stages: prior cutting, shredding and separation of rubber products from metal and fabric reinforcement materials, then grinding of rubber pieces and their following separation from small contamination of reinforcement material. Cutter blocks, rollers, rotor-knives crushers and grinders are used for this treatment. A metal cord and fabric are removed from the rubber by using magnetic and air separators, respectively.

The special method for grinding rubber crumb by rollers had high structured surface is described in U.S.Patent No. 4.840.316 issued 1989 to R.L.Barclay. The complex method involves primary cutting tires to 150-300 mm pieces by using knives and then following grinding by using rollers carried out in several steps with sequential separation of metal cord and other reinforcement materials is exemplified by U.S.Patent No. 4726530 issued 1988 to D.Miller.

In these methods mechanical rubber destruction is proceeded. General weaknesses of these methods are the multiple strong deformation of grinding materials resulted in rising temperatures of the material and increasing shearing strength that results in the enormous energy consumption, high wearing of equipment and low product yields. Energy consumption increases proportional to overall square of rubber crumb with decreasing their size. For example, it's known that grinding crumb to 0.5 mm size requires more then 1 kWh/kg.

Another serious weakness of these methods is that they are not capable to efficient recovering of rubber products reinforced by metal. The using of this equipment for the treatment, as for example, tires reinforced by metal lead to the energy expenses increasing, wear of equipment and loses connected with frequent replacement of the cutting tools.

In order to use crumb rubber in responsible rubber products such as tires it's necessary to ensure the technical demands to the crumb rubber quality, particularly the content of metal and fabric cord in the rubber crumb should be limited. With this aim rubber, metal and fabric fragments should be completely separated. This process is complicated by a high adhesion of these materials and requires the expensive multistage separation and complex equipment.

Cold crushing technique exemplified by Great Britain Patents No. 1.334.718 and No. 1.438.278 issued 1973 (C3E, MKI B29 H19/00) based on the deep cooling of rubber products to brittling temperatures of rubber permits to low energy consumption for crushing and to remove reinforcement material prior to the mechanical treatment.

The method consists of cooling of rubber products or their pieces to brittling temperatures of rubber, following mechanical destruction by using flexing, pressing or crushing and then removing at least the main portion of reinforcement elements. Therefore the general principle of this method is the previous separation of reinforcement elements due to changes of rubber properties by deep cooling the material to brittling temperature of rubber carried out in the inert atmosphere, for example in liquid nitrogen, and caused the destruction of this material.

The main weakness of cryogenic methods is high energy consumption for obtaining sufficient amount of liquid nitrogen which provides low temperatures in operation chamber. The overall expenses are known as also more than I kWh/kg.

Moreover, crushing rubber at the low temperatures requires special equipment, the heat insulation of every apparatuses, the isolation of cooled crumb from atmosphere as well as solution of many other technological problems.

In addition, the treatment of large-size products is accompanied with non-uniform cooling due to the low thermal conductivity of the rubber that requires continuous cooling. This leads to a high energy consumption and decreasing productive capacity. It's known that by these reasons rubber articles need to be shredded before freezing.

A method for recycling rubber products by exposing the products to simultaneous cryogenic treatment and an air ozone atmosphere containing 10 ppm ozone is known from JP-A-51 023 855. Said method also utilizes the gas containig ozone merely as an accessorial mean to the common cryogenic treatment.

Another method for recycling rubber products by destruction of the rubber basis by exposing the products to simultaneous actions of mechanical cutting and a gas mixture containing a similar amount of ozone is known from JP-A-51 024 972. Said small amout of ozone is used to produce microcracks in the rubber only to support the destruction of the rubber basis by common mechanical cutting.

The objects of the present invention are decreasing of energy consumption required for processing of rubber products, facilitation of non-rubber materials separation, advance of recycling process quality and quality of obtained secondary product, reduction of equipment wear and production costs.

To achieve these objects, the present invention provides a method as defined in claim 1, in which rubber products are exposed to simultaneous actions of mechanical loads and a gas mixture containing more than 0.1% and up to 10% of ozone, that causes the bursting of rubber and facilitates the separation of rubber from the reinforcement material without using mechanical cutting or crushing. During the deformation in ozone-containing gas rubber fragments may be additionally crushed to desirable size (0.01-5 mm).

The ozone ability to destroy rubber is used in the method. Strains of the material of deformed rubber products considerably facilitate their destruction. The deformation is not energy-intensive process and a little amount of ozone may provide the disintegration of the rubber. As a whole the method is energy-efficient and consumes less then 0.1 kWh/kg (the consumption may be decrease to 0.02 kWh/kg.)

The action of ozone permits to decrease considerably the forces required for the deformation of rubber. The destruction is achieved without cutting, breaking or readily abrasion of rubber, that reduces wearing of equipment relative to the common mechanical process.

The reinforcement elements are completely separated from the rubber without contamination of the rubber by their fragments. This permits to obtain the pure rubber crumb as well the rubber free metal without using multistage separation of small reinforcement fragments and complex apparatuses for removing rubber from metal and fabric cord. It decreases product output and decreases production wastes volume.

The present method for processing of rubber products permits to provide environmentally safe technology.

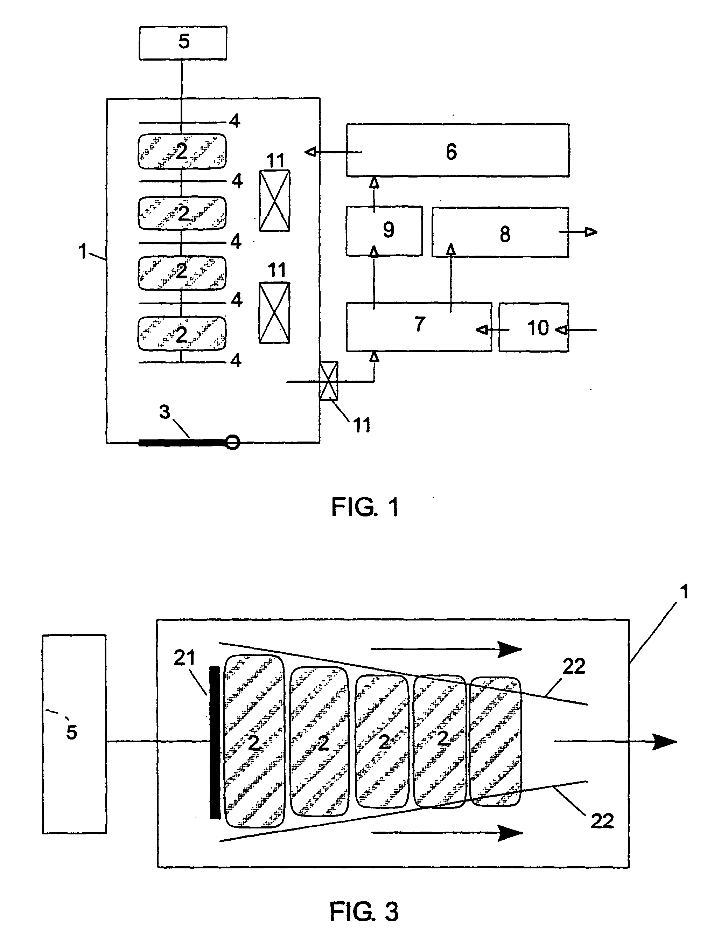

Several variants of units for carrying out the present method are shown in Figs. 1-7. Some apparatuses elements which are common for different variants are shown in one or two schemes only. The explanations will be done in the following detailed description.

Fig. 1 is a schematic illustration of periodic operating unit. The unit consists of a chamber (1) for treatment or decomposition of products (2) equipped with input and output sluice-gates (3) and means (4) provided the deformation and started by using a power device (5). The gas system of the unit consists of a generator of ozone (ozonizer (6)), gas distributor (7), ozone destroyer (8), block for gas preparation (9) and compressor (10). Light arrows point the direction of gas flow in the closed gas system with partial renewal of working gas. Facilities for gas circulation (11) (blowers, as for instance) are placed in the chamber (1).

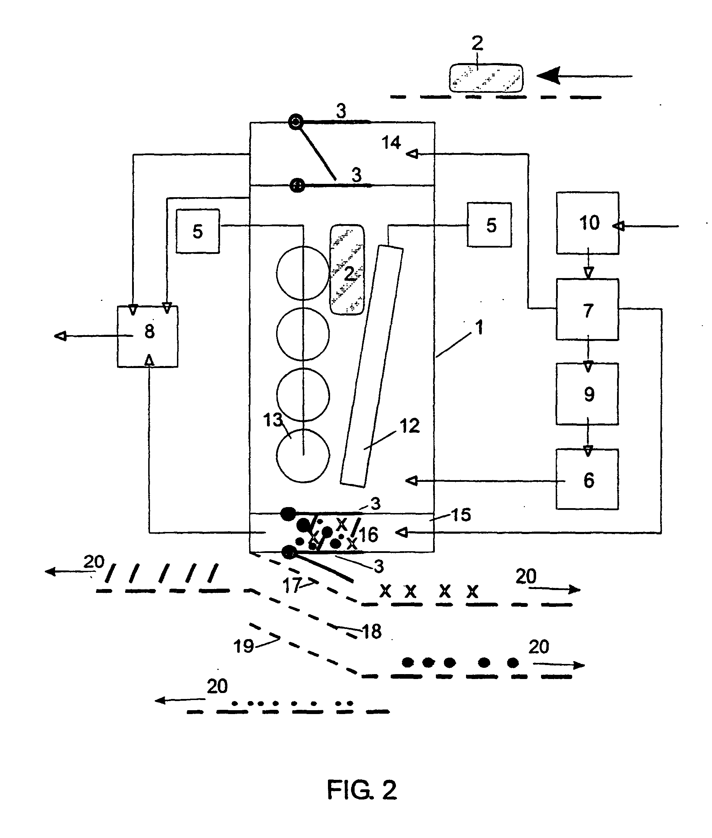

Fig.2 shows the schematic illustration of the unit of continuous operating for carrying out the process of conveyer mode. Devices common for Figs. 1 and 2 are noted by the same numbers. The treatment chamber, equipped with means for deformation (12) and for transport (13) of the products (2) connected with input (14) and output (15) sluice gates for loading of feeds (2) and discharge of the products, respectively. The products (16), including pieces of rubber of various size noted as circles and different reinforcement elements noted as crosses and length enter through output sluice (15) into the separation system which involves means (17) for removing fabric, fiber glass and other large reinforcement fragments, a separator (18) for removing metal and an assorter (19) of various fractions of rubber crumb. The light arrows point the gas flow in the open gas system which involves elements identical to those of the close system (fig. I ), the black arrows point the direction of transport of materials by using conveyer (20).

Fig.3 is a schematic illustration of the unit where a feed (2) is pressed by the press (21) through narrowing slit-like or cone shape elements (22). Gas system, systems of input, output and separation of the products are not shown in the figs. 3-7.

Fig.4 is a schematic illustration of the unit for carrying out the process by using the cone shape grinder, where the rubber feed (2) and its fragments (23) produced during the destruction undergo the deformation in the space between the walls of chamber (1) and the cone-shape element (24) driven by the motor (5). The treatment chamber (1) is coupled with a system for separation of metal reinforcements from the treated products (25).

Fig.5 is a schematic illustration of the unit similar to that shown in the fig.4, where the deformation of rubber feed (2) and its fragments (23) is taking place in the whole volume of the chamber (1) between turning elements (26) of the rotor (27) and elements (28) fixed in the chamber (1).

Fig.6 is a schematic illustration of the unit for processing of feed (2) by using a device of ball mill type, where the chamber (1) rotates relative to axis (29) and contains the weights (30) besides of feed (2).

Fig.7 is a schematic illustration of the unit for processing of feed (2) by using a device of millstone type. The feed (2), its fragments (23) and rubber crumb (31) separated from reinforcement elements are grinded between two elements (32) which forms narrowing slit.

The corrosion process of rubber bursting in the ozone presence defining the background of the present method is a physical process of widening cracks occurred during the chemical interaction of polymer molecules with ozone that causes their breaking. It is known that the initiation of the mechanical destruction of the rubber requires not less a certain amount of energy per unit of tearing square. For the natural and butadien-styrol resins these amount of energies are about 40 J/m2 and 60 J/m2 , respectively. In the presence of ozone the widening of cracks requires considerably less energy - about 0.1 J/m2 [1]. Therefore the consumption of mechanical energy for providing strains of rubber during its disintegration in the presence of ozone is extremely small relatively to that using for the destruction by mechanical means. Overall energy consumption of the present method depends on the energy demands for obtaining ozone required for the rubber disintegration.

The bursting of rubber by using the ozone occurs when the critical level of deformation of the material is exceeded. For antiozonant free rubber this level is 1―5%; more accurate values of this level may be obtained in dependence on the rigidity of vulcanized rubber and the grade of its square treatment [2]. These deformation values (>1%) may be obtained at strain levels of rubber more then 0.5 kg/cm2.

The addition of effective chemical antiozonants to the rubber considerably increases the critical level of deformation up to more then 100% for N'N-dialkyl-p-phenilendiamines [2]. Under exposing in ozone (particularly at high concentrations N > 0.01%) the antiozonanted rubber losts its ozone resistance.

The concentration of ozone N considerably effects on the ability of stabilizing additions to increase the critical level of deformation and to prevent the disintegration of rubber in the presence of ozone. When N exceeds a critical level the effect of antiozonants is completely suppressed. Usually this concentration level is 0.01%. At the extremely high concentration of the most effective antiozonants N'N-dioctyl-p-phenylendiamines (15 parts per 100 parts of resin) the rubber holds its resistance to ozone till the 0.1% [3 ]. The efficient treatment of the rubber even containing antiozonants is possible at the sufficiently high ozone concentration and strains of the rubber.

During rubber bursting by ozone a number of cracks and the rate of their widening depend on strains in the material, moreover the more strains the more the rate and the number of cracks. Hence, the rate of ozone disintegration of rubber as well as a size of producing crumb which depends on the length between cracks may be regulated by changing both a level and a character of strains appeared in material.

Under the ozone action cracks are formed in areas of the highest strains of the rubber. The unequal distribution of strains induced during cracking and their concentration in the tops of cracks result in the following breaking just in these tops and eventually in the drastic disintegration of the material. Therefor, the disintegration of rubber is accompanied only with change in the structure of certain areas of the surface without any transformations in the volume and so, the specific consumption of ozone required for the rubber disintegration is extremely low.

At the high rate the disintegration may be limited by diffusion of ozone from the gas to the rubber surface. This is prevented by a gas circulation near the surface that increases the convection and provides the fast kinetic disintegration. The diffusion also decreases under the cyclic deformation.

To provide the efficient disintegration of the rubber the conditions for obtaining the high strains concentrations in the material should be created in addition to the effects of deformation and ozone. This is favored by sufficient mobility of breaking molecules. When their motion is hindered, for example by low temperature, the cracking decreases or even does not occur. To provide the high rate of disintegration the temperature of the rubber should be sufficiently higher then its brittling temperature. Hence, the treatment process may be efficiently carried out even at the room temperature and accelerated with the temperature rising. The optimization of the disintegration of rubber using ozone involves not only studying the dependence of process rate from temperature but also thermal decomposition of ozone increasing with temperatures above 100°C.

The rate of the rubber bursting under ozone action decreases in the presence of water in atmosphere due to swelling of rubber resulted in decreasing and more uniform distributing of strains. Therefore, to accelerate the process it's expedient to carry it in dry air and under dried rubber products.

The rubber bursting also occurs during the cyclic deformation of the material and may be intensified by combining the static deformation and vibration.

The examination of the present invention has been carried out at various ozone concentrations (0.01%-20%), temperatures (10-110°C), grades of rubber stretch (0-200%), gas flow rates relatively to the surface (0-10 m/s) using different samples of rubber products involving pure rubber products, rubber tires reinforced with fabric and metal cord, high pressure rubber tubes reinforced by several metal layers. Examinations have been carried out in the presence of air enriched by ozone, various oxygen containing mixtures including pure oxygen with ozone contents up to 20%. Static and dynamic deformations as well as effect of sound vibration were used for the examinations.

The data of the examination shown the possibility of the efficient recycling of rubber products by mechanical loads in ozone containing gas. The optimum parameters of the proceedings were obtained for different rubber products.

The deformation of rubber products in ozone containing gas results in their destruction; when reinforced elements are presented then they are liberated from the rubber. The rate of destruction increases with the ozone concentration and the level of deformation. When the contents of ozone or the level of deformation increases from 0.2 to 2% or from 3 to 30%, respectively, the time required for the rubber destruction is shorted from several hours to tens of minutes.

According to data on the ozone consumption in the treating chamber and on rates of obtaining rubber crumb the consumption of ozone that is sufficient for the disintegration of the rubber deformed can be as small as about 1g per 1kg of rubber and for the most cases does not exceed more then 4 g/kg in dependence of process conditions (concentration of ozone, level of deformations and the rate of process). The energy consumption for ozone production from a dried air and oxygen are 16 and 8 Wh/g, respectively [4 ]. Thus, the overall consumption of the present process is not more then 0.07 kWh/kg and in special conditions it may be lowed down to 0.02 kWh/kg. When oxygen using as a working gas the energy consumption can be decreased twice less.

During examination the energy consumption for the mechanical deformation of the rubber products did not exceed 30% of energy required for ozone obtaining and in some cases was less then 10% from those expenses.

The reinforcement elements do not hinder the rubber destruction and their material (metal, fiberglass, fabric) does not considerably effect to the recycling process. The present method permits to separate the reinforcement elements from the rubber thoroughly that excludes the contaminating of rubber by these elements. This important advantage of the present method permits to produce crumb of high quality without using complete separation of the rubber from small fragments of reinforcement elements and special apparatuses for removing rubber crumb containing metal wire, cord and fiber.

To determine the optimum parameters of the process one should taken into account that the more the concentration of ozone the less the time of the process but at the same time the more the energy consumption for producing ozone [4]. It is not expedient to decrease the concentration of ozone less then 0.1% due to the abnormal rising the time of the process, especially in processing of the rubber products treated with antiozonants. Optimal ranges of ozone concentration are 0.1-10% and when air is used in the ozonizer as a working gas - 0.2-2%.

It is determined that the present method requires both the exposition of the rubber products in the ozone and simultaneously uninterruptedly deformation of the rubber so that the relative deformations were more than the threshold level for ozone bursting which is about 1-5 %. As a rule, material strains about 0.5 kg/cm2 are enough for these levels.

To destroy the products of challenging configuration it is expedient to vary the directions of loading forces that will provide the deformation and following destruction of every part of the product. To obtain during treatment small size rubber crumb which can be used as secondary stock material it should be expedient to load the forces to the separated large size rubber fragments until the necessary crumb size reducing will be achieved. The variation of forces loaded also permits to regulate the process rate and size of crumb.

It was determined that when temperature increases from 10 to 100°C the rates of processing of some types of rubber products may be increased by tens times. Because this effect depends on the sort of rubber the temperature conditions should be obtained for every sort individually.

To accelerate the process it also should be expedient to provide the gas circulation near the surface of the products. But the intensification of the gas exchange more then certain satisfactory level practically has no effects to the following rubber destruction.

Therefore examinations carried out shown that the present method for recycling of rubber products including allows to carry such recycling by efficient way and can be applied for products reinforced by metal. Energy consumption of this method is 10-50 time less then the ones of other methods. The separation of rubber from the reinforcement elements is carried out readily without cutting or shredding, so the absence of apparatuses for these procedures lowers the wearing of equipment. Thus the object of the present invention is achieved.

The present invention may be embodied in different modes depended on product types, aims and conditions of the process. A variety of modes are shown in figs. 1-7.

Fig. 1 is a schematic illustration of the unit for carrying out a periodic process operation. Product (2) is loaded into the chamber (1) through the input sluice-gate (3). Because of the toxicity of ozone the chamber (1) is sealed hermetically to prevent the loss of the gas. This airtightness is provided by known technical means. Internal surface of the chamber (1) should be made by the material resisted to ozone, for example steel, aluminum, teflon, polyethylene etc.

Products (2) are strained by using mechanical elements (4), placed in the chamber. Profiled disks screw joined with the rotating axis may provide different kinds of deformations (flexure, compression, twisting, stretching) or their combinations. The efforts are transmitted to elements (4) by means of the thickened input of the power device (5) which may be an electric motor connected with reducing gear, hydro or pneumatic motors.

Mechanical strains loaded to the products may be of static or dynamic in nature. The most simple way to provide the first type of strains is the deformation under the weigh loaded to products. The period of dynamic strains is about ten - hundreds seconds, they also may be resulted from vibrations of elements (4) with frequencies from 1 to several G transmitted to the products. It is expedient to use at the high frequencies the resonance between own rubber and external vibrations.
The oxygen containing gas is pumped through a gas preparation system (9) where it is dried and purified from dust and oil contamination into ozonizer (6) by a compressor (10). From the ozonizer (6) ozone containing gas is directed to the chamber (1).

Gas went out of chamber (1) contains remaining concentration of ozone and oxygen and may be at least partially used for producing ozone or processing of products . Gas distribution is regulated by valve system (7). To prevent the ozone exhaust to the atmosphere ozone converts to oxygen catalytically or at the ambient temperatures in ozone destroyer (8) [4 ]. The valve system controls gas flow in ozonizer (6) and ozone destroyer (8) providing required gas recirculating in the closed system. Thus, the unit of this mode can operates in the regime of cyclic gas system with the partial gas regeneration. This is true for units of every modes for processing rubber products by the present invention.

The gas circulation in the chamber (1) is provided by means for forcing gas (11), for example ventilators. The vent of ozone out of chamber (1) by ventilator (11) permits to lower the gas pressure in the chamber that prevents loss of ozone containing gas.

Fig.2 is a schematic illustration of the unit for carrying out a continuos process operation. Elements identical for fig. 1 and 2 are noted with the same numbers. The treating chamber (1) is joined with input (14) and output (15) sluice gates for loading the feed and discharging products, respectively. The airtightness of sluice gates is provided by known technique. The raw rubber products (2) that may contain reinforcement elements transported by converter (20) through the input sluice gate (14) to chamber (1). Products (16) consisted of rubber crumb of different size denoted as circles of various diameter, metal cord denoted as short length and other reinforcement elements (crosses) are removed from chamber (1) through the output sluice gate (15) and then transported to the system of separation involved means for rubber separation from fabric (for instance large size mesh), metal cord (for instance magnetic separator), and also for separation of rubber crumb according to their size (an assorter (19), which may be embodied as, for instance vibrating mesh of different diameters). Rubber crumbs and reinforcement elements are transported by conveyers (20) for the following treatment and packing, respectively. Packed reinforcement elements may be used as a secondary raw material.

Gas system of the unit described consists of elements identical to those of the system shown in fig 1. This is an open system using disposable ozone containing gas. Ozone free gas is directed by valve system (7) for blowing sluice gates (14, 15). Ozone containing gas may be directed to chamber (1) by special gas distributor (it does not shown in the fig.) which provides gas entering directly to the surface of products. This distributor may be embodied as ventilators and stainless or ozone-resistant perforated plastic tubes. It is expedient to direct gas from the ozonizer to mechanical means for deformation (12, 13) of rubber products (2) immediately. For testing optimum parameters of the process the controllers of ozone concentration (it does not shown in the fig.) should be constructed in different places of the unit, at first near outputs of the ozonizer and chamber (1).

This scheme is illustration of embodiment of the unit for carrying out the conveyer process operation, where means provided mechanical strains (13) may comprise rotating rollers which simultaneously deform and direct the products (2) to the narrow slit between elements for deformation (12) and (13). The element (12) may be also embodied as rotating rollers or elastic fixed massive elements with profiled surface fitted, for example with teeth for inducing local strains to the product. In the mode described as well as in the other modes of the present invention discussed below the power device (5) set in motion elements (12, 13) may be embodied as electric motors, hydraulic or pneumatic cylinders and in the portable mode - as an engine. To intensify the process power devices may provide a vibration, for ex. element (12).

Certainly the mode of the unit described above is not an unique. Other modes and their main principle are considered below excepting details.

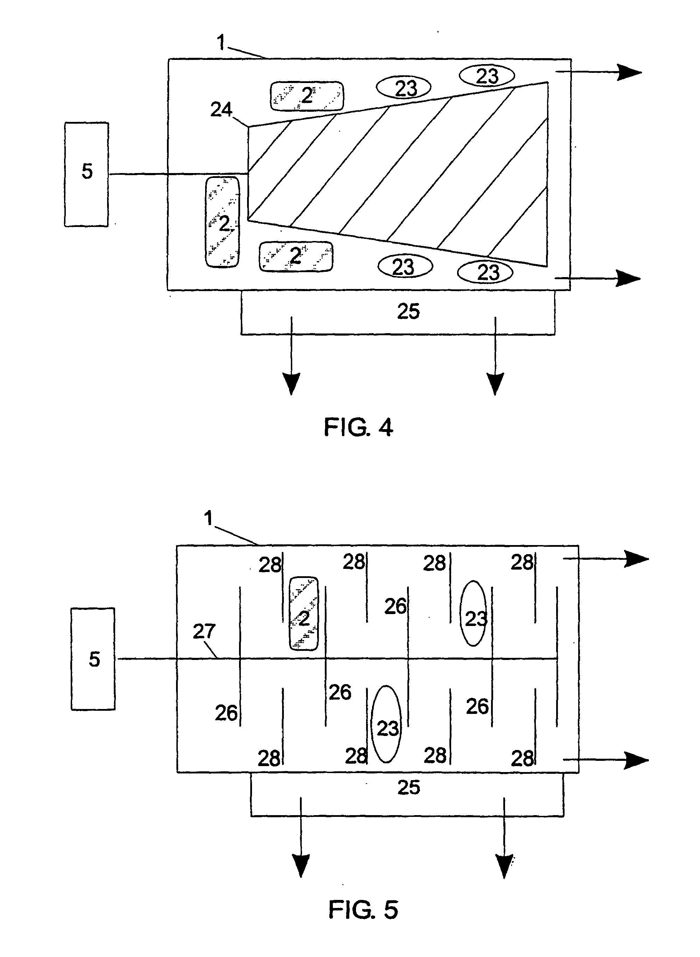

Fig.3 is illustration of embodiment of the unit where products (2) are pressed through narrowing cone shape or slit-like directive elements (22) by using press (21). These elements (22) may be embodied as a cones, planes or networks and edges placed along the former of these or similar figures. Products (2) transported to narrow top of cone undergo axial and radial strains. Forces and their distribution along the cone depend on strains created by press (21) and an angle of taper. When the load of products is sufficiently large and the chamber is upright, strains of the products may be induced by weights of upper lays of the products. Thus, constant loading of products from the top down creates a possibilities for carrying out continuous process without using additional force means.

Elements (22) may be curved or slope relative to the axis of cone to induce tangential strains and twisting of the product. Fragment producing in destruction of the product (2) are removed out of the working space through a net-work or between edges of element (22). In the embodiment described stretching through elements (21) may be used instead of the pressing of products. In this case products are stretched by hooks connected by chain or crawler-type drive through slits between elements (22). When one of elements (22) is completely or partially replaced with means mentioned above, for instance hook with crawler-type drive the present embodiment becomes in Principle similar to that shown in the fig.

Figs. 4 and 5 are illustration of unit where elements (24, fig.4) and (27, fig.5) used for the deformation of products (2) and their fragments (23) are embodied as rotors. In the mode shown in fig.4 it is constructed as cone or pyramid which has a narrowing ring-type slit formed along the surface and providing at first shear strains of products. When on the surface of cone (24) or on the internal surface of chamber (1) either on both of surfaces the worm-type formers are constructed at an angle relative to rotating axis the products undergoes strains directed along to a narrowing slit that results in their stretching pressing and curving deformations. Rotors (24, 27) may be placed radial or to provide a periodic pressing of products and their fragments eccentric relatively to the axis of rotation.

In the mode shown in fig. 5 elements (26) fixed along to the axis of rotor (27) may be embodied, for instance as disks, blades or needles. These elements (26) together with elements (28) fixed in chamber (1) provides shear strains of products (2). As the destruction of products (2) occurs their fragments (23) move down to the bottom where slits between elements (26) and (28) decrease in such a way as to deform a pieces of decreasing size.

To intensify the processing of reinforced rubber products particularly with metal reinforcements and to facilitate their separation it is expedient to expose products to the action of magnetic field, that due to magnetic attraction of metal elements induces additional strains in the rubber and facilitates separation of metal elements from other reinforcement materials just during the process. For this purpose the means of this separation (25) embodied, for instance as rotating or electric magnet should be joined with the treatment chamber (1) in such a way as to provide a removing metal elements from products destroyed. Metal elements are removed out of the surface of magnet (25) by using special knives (does not shown in figs.) or by periodic switching off power supply as it is usually done.

Every embodiments of units for processing of rubber products using ozone described above requires motion of chamber (1) and rotors (24,27) relative to each other. This is obviously may be achieved when rotor is fixed and chamber (1) rotates by using power device (5).

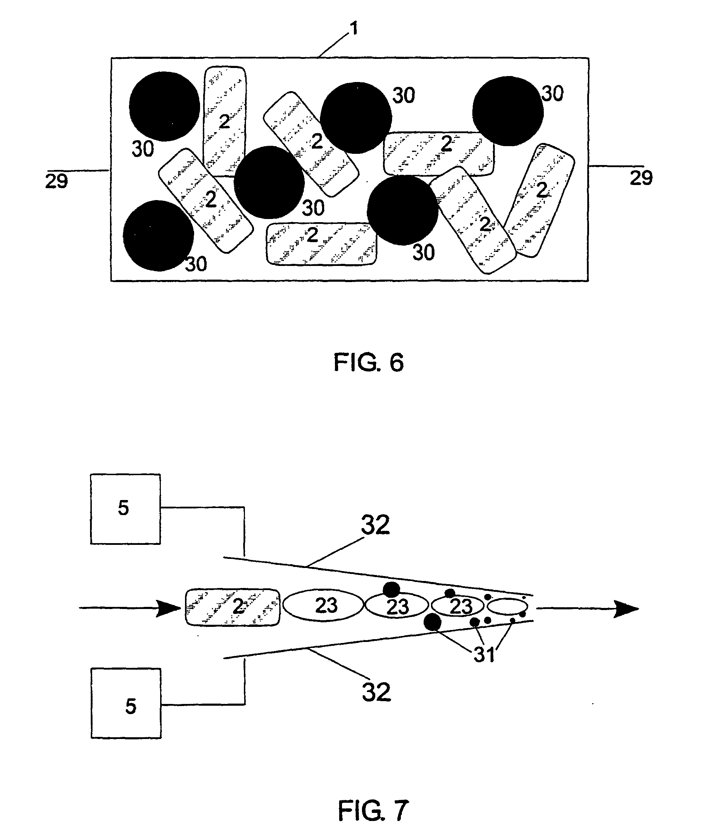

Fig.6 is illustration of embodiments of unit when products (2) are loaded into chamber (1) moved around axis (29), which may be constructed along to the own axis of chamber (1) or eccentric. In the chamber the strains of products are provided by weights (30) placed into the chamber and which can move freely during chamber rotation caused by gravity or be fixed by link. It should be noted that weights (30) are not the urgent elements of the present mode, products may fulfil their function themselves.

Fig.7 is illustration of unit when products (2), their fragments (23) and rubber crumb (32) undergo shear strains by using millstone type elements (31), which rotate or move reciprocally. This motion as well as pressing of feed products (2, 23, 32) between millstones is provided by power device (5).

The modes of units described above are not an alternative ones and may complement each other. Every element or their combinations may be used in different modes. For instance, the action of magnetic field to the metal reinforcements of the products during their destruction or deformation of products by using vibration may be supplied in every units. Every modes of gas system (fig.1,2) including means for gas circulation in the chamber (1) may be also used in the units with modules shown in figs. 3-7. Periodic (fig.1) and continuous (fig.2) schemes of operation as well as system of separation (fig.2) may be also realized in these units.

In every unit means for deformation of rubber products (4, 12, 13, 21, 22, 26,28, 30, 31) may be supplied with edges, teeth, needles and cuts providing high local strains and readily destruction.

To intensify processing of rubber products it is expedient to remove produced rubber crumbs of small size out of the treatment space. With this aim elements inducing strains, for instance directive elements (22, fig. 3), cone (24, fig.4) and millstones (31, fig. 7) should have holes of given diameters, through which crumb are removed out of the treatment space and then from the chamber (1). Moreover, in the unit shown in figs. 1, 5, 6 walls of chamber (1) should be perforated. To provide airtightness of treatment space of chamber the additional non-forcing cover should be constructed.

In some cases, particularly in processing of rubber products of complex configuration and composition such as tires reinforced with metal cord, it is expedient to carry out two or multistage process involving the prior destruction of the product occurred at the first step and producing final product at the following steps. In these cases the prior cutting of products of complex configuration may be also used. The application of prior mechanical cutting to the methods described will be considered more detail in the following discussion of industrial usage of the present invention.

It is possible to combine the different modes of embodiment of the present invention. For instance, scheme shown in fig. 3 and millstones (fig. 7) may be used at the first and second stages, respectively; the scheme shown in fig. 5 and cone shape grinder (fig. 4) may be used at the second stage. The optimal combination should be chosen according to quality and quantity of products.

Taking into account that moisture suppers the ozone disintegration it is expedient to process dried rubber products. Exhausted gas obtained before and after ozone destroyer may be used for drying. This gas may be dried in the gas preparation system (9) and heated before ozone destroyer in ozonizer (6) or in ozone destroyer itself (8).

To intensify the process and to obtain the high quality products the optimal temperature of rubber products should be chosen in accordance with their type. For the majority of material these temperatures range from 10 to 110oC. In dependence of the temperature of products heated by ozone containing gas obtained from ozonizer as well as during their deformation the additional systems for heating products or for heat removing out of the treatment space should be used.

In conclusion it should be noted that units constructed for testing ozone resistance of rubber samples such as that described in [11] are not able to realize the present method which permits to produce rubber crumb in continuous operating processing of large tonnage of rubber products of complex configuration.

The industrial application of the method does not require any special embodiment which may not be constructed by using modern technology.

Usage of the method may facilitate the problem of processing of spent rubber products, a value secondary stock material, and opens the possibility for construction of efficient, responsive to environmental concerns equipment for this process.

The method for recycling of rubber products also make a possibility to carry out the process which is considerably more responsive to environmental concerns then common mechanical methods. Answering environmental demands the embodiment of the method must be capable of satisfying three requirements: at first the treatment chamber should be hermetically sealed, secondly the ozone decomposition should be carried out in the flow of exhausted gas and at last the exhausted gas should be filtered to remove the noxious contamination.

As it was mentioned earlier the technological problem of hermetic sealing of equipment may be facilitated by decreasing pressure in the treatment and sluice chambers. In this case the delution of working gas with air due to insignificant faults of thickening system will be negligible. It should be also noted that in the environment the spontaneous decomposition of ozone to oxygen readily takes place in the air and on the surface of equipment. Thus, the decomposition of residual ozone may be easily carried out prior to gas exhausting by using the ozone destroyer where ozone is converted to oxygen.

The problem of purification of exhausted gases and removing noxious contamination should be solved in any processing of rubber products, as these contamination are formed in any process of the rubber disintegration. The present invitation for processing of rubber products by using ozone permits to facilitate this problem at the expense of low temperatures of the process, cycle of operations and high oxidative capability of ozone that allows to burn up the organic contamination in the exhausted gases. Therefore, the present method is considerably more responsive to environmental concerns then common methods.

Because the method is cost effective in the destruction of any rubber products it can be applied as a first stage to the processes required the prior shredding of products such as the combustion, the regeneration, pyrolysis or cryogenic process.

On the other hand since mechanical shredding of rubber to crumb is the most energy consumption stage of the mechanical treatment relatively to cutting of rubber, the latter may be efficiently combined with the present method in processing of rubber products of complex configuration. In these cases the method may be combined with the mechanical treatment as a final stage of producing crumb rubber and separation of reinforcement elements if they are present in the rubber products.

### References

1. Barteven G. M., Zuev Yu. S., Prochnos't' i razrushenie vysokoelasticheskikh materially, Moscow, Khimia, 1964 ( The stability and destruction of high elastic materials).
2. Lorentz O., Parks C. R. Rubber Chem. Technology, 1963, 36, 201.
3. Braden M., Gent A. N. Action of antiozonants, J. Appl. Polym. Sci., 1962, 6, 449.
4. Tekhnicheskie zapiski po problemam wody, (Memento technique de l'eau. Degremon), Moscow, Stroyizdat, 1983, (The technical papers on the water problem, Engl. Transl.)

## Claims

1. A method for recycling of rubber products by destruction of rubber basis in the presence of gas containing ozone, whererin the products are exposed to the simultaneous actions of mechanical loads with the relative rubber deformations maintained between 1% and 500%, and of gas mixture containing more than 0.1% and up to 10% of ozone to produce rubber crumb and non-rubber materials.

2. The method of Claim 1, additionally including the step of separation of produced rubber crumb from non-rubber materials.

3. The method of Claim 1 or Claim 2, wherein the method is carried out at temperatures between 10°C and 110°C.

4. The method of any one of Claims 1 to 3, additionally including the step of providing relative moving of ozone containing gas near rubber products with velocities more than 3 cm/s so as to supply constant access of ozone to the rubber surface.

5. The method of any one of Claims 1 to 4, wherein mechanical loads are applied to all rubber fragments and the method is carried out up to reduce crumb rubber size down to 5 mm - 0.01 mm.

6. The method of any one of Claims I to 5, wherein mechanical loads are applied to rubber products as deforming vibrations having a frequency from 1 Hz up to 3 kHz.

7. The method of Claim 6, wherein frequency of the deforming vibrations is selected so as to be close to the resonant frequency of the rubber product

8. The method of any one of Claims 1 to 5 or 7, wherein mechanical loads are applied to rubber products simultaneously with deforming vibrations having a frequency from I Hz up to 3 kHz and slowly varying the loads for a period of more than 10 s.

9. The method of any one of Claims 1 to 8, additionally including the step of exposing the rubber product to a magnetic field and separation metal elements from rubber crumb.

10. The method of any one of Claims 1 to 9, additionally including the step of removing the rubber crumb produced during the treatment process.

11. The method of any one of Claims 1 to 10, wherein the process is carried out in a treatment chamber with a closed loop gas system providing partial gas regeneration.

12. The method of any one of Claims 1 to 11, additionally including the step of destroying of residual ozone in an exhaust flow from the treatment chamber.

13. The method of any one of Claims 1 to 12, additionally including the step of drying the rubber products before and/or during the ozone treatment.

14. The method of any one of Claims 1 to 13, wherein the rubber products are loaded into the treatment chamber, where circulation of ozone containing gas is provided to achieve a required degree of processing, and then the products of processing are discharged from the chamber.

15. The method of any one of Claims 1 to 13, wherein the rubber products are loaded into the treatment chamber through sluices gates and the products of processing are unloaded from the chamber through other sluices gates so as to allow continuous operation.

16. The method of Claim 15, wherein the rubber products are simultaneously deformed and moved through a consistently located mechanical means of deformation.

17. The method of Claim 15, wherein mechanical loads are applied to the rubber products by rotation of a rotator located on an axis of the treatment chamber.

18. The method of Claim 14 or Claim 15, wherein the method is carried out by rotation of the chamber containing the rubber products.

19. The method of Claim 14 or Claim 15, wherein the rubber products are subjected to deformation by compression and shift between two or more elements of a millstone type.

## Patentansprüche

1. Verfahren zum Recycling von Gummiprodukten durch Zerstörung der Gummistruktur in Gegenwart von ozonhaltigem Gas, wobei die Produkte einer gleichzeitigen Wirkung von mechanischen Kräften mit relativen Gummideformationen zwischen 1 % und 500 % und einer Gasmischung enthaltend mehr als 0,1 % und bis zu 10 % Ozon unterworfen werden, so dass Gummibruch und Nichtgummimaterialien hergestellt werden.

2. Verfahren gemäß Anspruch 1 mit dem zusätzlichen Schritt der Trennung des hergestellten Gummibruchs von den Nichtgummimaterialien.

3. Verfahren gemäß Anspruch 1 oder Anspruch 2, wobei das Verfahren bei Temperaturen zwischen 10° C und 110° C durchgeführt wird.

4. Verfahren nach einem der Ansprüche 1 bis 3, mit dem zusätzlichen Schritt eine Relativbewegung des ozonhaltigen Gases mit Geschwindigkeiten über 3 cm/s in der Nähe der Gummiprodukte bereitzustellen, um einen konstanten Zutritt des Ozons zu der Gummioberfläche zu gewährleisten.

5. Verfahren gemäß einem der Ansprüche 1 bis 4, wobei auf alle Gummibruchstücke mechanische Kräfte ausgeübt werden und das Verfahren bis zu einer Reduktion der Größe des Gummibruchs auf 5 mm bis 0,01 mm durchgeführt wird.

6. Verfahren nach einem der Ansprüche 1 bis 5, wobei die mechanischen Kräfte als deformierende Schwingungen mit einer Frequenz von 1 Hz bis 3 kHz auf die Gummiprodukte ausgeübt werden.

7. Verfahren gemäß Anspruch 6, wobei die Frequenz der deformierenden Schwingungen so gewählt ist, dass sie nahe der Resonanzfrequenz des Gummiproduktes liegt.

8. Verfahren gemäß einem der Ansprüche 1 bis 5 oder 7, wobei mechanische Kräfte gleichzeitig mit deformierenden Schwingungen mit einer Frequenz von 1 Hz bis 3 kHz auf die Gummiprodukte ausgeübt werden und die Kräfte langsam über eine Dauer von mehr als 10 s variiert werden.

9. Verfahren gemäß einem der Ansprüche 1 bis 8, mit dem zusätzlichen Schritt, die Gummiprodukte einem Magnetfeld auszusetzen und metallische Teile vom Gummibruch zu trennen.

10. Verfahren gemäß einem der Ansprüche 1 bis 9, mit dem zusätzlichen Schritt der Entfernung des produzierten Gummibruchs während der Behandlung.

11. Verfahren gemäß einem der Ansprüche 1 bis 10, wobei das Verfahren in einer Prozesskammer mit einem geschlossenen Gaskreislaufsystem, das eine teilweise Gasregenerierung gewährleistet, durchgeführt wird.

12. Verfahren nach einem der Ansprüche 1 bis 11, mit dem zusätzlichen Schritt der Vernichtung von verbleibendem Ozon in einem Abluftstrom aus der Prozesskammer.

13. Verfahren gemäß einem der Ansprüche 1 bis 12, mit dem zusätzlichen Schritt der Trocknung der Gummiprodukte vor und/oder während der Ozonbehandlung.

14. Verfahren gemäß einem der Ansprüche 1 bis 13, wobei die Gummiprodukte in die Prozesskammer eingebracht werden, wo eine Zirkulation von ozonhaltigem Gas gewährleistet wird, um einen erforderlichen Grad der Behandlung zu erreichen und dann die Produkte der Behandlung aus der Kammer entnommen werden.

15. Verfahren gemäß einem der Ansprüche 1 bis 13, wobei die Gummiprodukte durch Schleusentore in die Prozesskammer eingebracht und die Produkte der Behandlung durch andere Schleusentore aus der Kammer entnommen werden, um einen kontinuierlichen Betrieb zu erlauben.

16. Verfahren gemäß Anspruch 15, wobei die Gummiprodukte durch ein ortsfest angebrachtes mechanisches Verformungsmittel gleichzeitig deformiert und bewegt werden.

17. Verfahren gemäß Anspruch 15, wobei die mechanischen Kräfte durch Rotation eines Rotators, der auf einer Achse der Prozesskammer angebracht ist, auf die Gummiprodukte ausgeübt werden.

18. Verfahren gemäß Anspruch 14 oder Anspruch 15, wobei das Verfahren durch Rotation der Kammer, die die Gummiprodukte enthält, durchgeführt wird.

19. Verfahren gemäß Anspruch 14 oder Anspruch 15, wobei die Gummiprodukte einer Deformation durch Kompression und Bewegung zwischen zwei oder mehr Elementen vom Mühlentyp unterworfen werden.

## Revendications

1. Procédé de recyclage de produits en caoutchouc par destruction de la base de caoutchouc en présence de gaz contenant de l'ozone, dans lequel les produits sont exposés aux actions simultanées de charges mécaniques, les déformations relatives du caoutchouc étant maintenues entre 1% et 500%, et d'un mélange de gaz contenant plus de 0,1% et jusqu'à 10% d'ozone pour produire de la poudrette de caoutchouc et des matériaux non composés de caoutchouc.

2. Procédé selon la revendication 1, englobant en outre l'étape de séparation de la poudrette de caoutchouc produite des matériaux non composés de caoutchouc.

3. Procédé selon les revendications 1 ou 2, dans lequel le procédé est exécuté en présence de températures comprises entre 10°C et 110°C.

4. Procédé selon l'une quelconque des revendications 1 à 3, englobant en outre l'étape d'établissement d'un déplacement de gaz à base d'ozone près des produits de caoutchouc à des vitesses supérieures à 3 cm/s pour assurer un accès constant de l'ozone vers la surface du caoutchouc.

5. Procédé selon l'une quelconque des revendications 1 à 4, dans lequel les charges mécaniques sont appliquées à tous les fragments de caoutchouc, le procédé étant exécuté afin de réduire la poudrette de caoutchouc à des dimensions comprises entre 5 mm et 0,01 mm.

6. Procédé selon l'une quelconque des revendications 1 à 5, dans lequel les charges mécaniques sont appliquées aux produits de caoutchouc sous forme de vibrations déformantes avec une fréquence comprise entre 1 Hz et 3 kHz.

7. Procédé selon la revendication 6, dans lequel la fréquence des vibrations déformantes est sélectionnée de sorte à être proche de la fréquence de résonance du produit de caoutchouc.

8. Procédé selon l'une quelconque des revendications 1 à 5 ou 7, dans lequel les charges mécaniques sont appliquées aux produits de caoutchouc de manière simultanée aux vibrations déformantes ayant une fréquence comprise entre 1 Hz et 3 kHz, les charges étant variées lentement pendant une période de plus de 10 s.

9. Procédé selon l'une quelconque des revendications 1 à 8, englobant en outre l'étape d'exposition du produit de caoutchouc à un champ magnétique et de séparation des éléments métalliques de la poudrette de caoutchouc.

10. Procédé selon l'une quelconque des revendications 1 à 9, englobant en outre l'étape d'élimination de la poudrette de caoutchouc produite au cours du procédé de traitement.

11. Procédé selon l'une quelconque des revendications 1 à 10, le procédé étant exécuté dans une chambre de traitement, un système de gaz en boucle fermée assurant une régénération partielle du gaz.

12. Procédé selon l'une quelconque des revendications 1 à 11, englobant en outre l'étape de destruction de l'ozone résiduel dans un courant d'évacuation à partir de la chambre de traitement.

13. Procédé selon l'une quelconque des revendications 1 à 12, englobant en outre l'étape de séchage des produits de caoutchouc avant et/ou pendant le traitement à l'ozone.

14. Procédé selon l'une quelconque des revendications 1 à 13, dans lequel les produits de caoutchouc sont chargés dans la chambre de traitement, dans laquelle est établie une circulation de gaz à base d'ozone pour assurer un degré de traitement requis, les produits du traitement étant ensuite déchargés de la chambre.

15. Procédé selon l'une quelconque des revendications 1 à 13, dans lequel les produits de caoutchouc sont chargés dans la chambre de traitement à travers des vannes de décharge, les produits du traitement étant déchargés de la chambre à travers d'autres vannes de décharge pour permettre un fonctionnement continu.

16. Procédé selon la revendication 15, dans lequel les produits de caoutchouc sont simultanément déformés et déplacés à travers un moyen mécanique de déformation à agencement constant.

17. Procédé selon la revendication 15, dans lequel les charges mécaniques sont appliquées aux produits de caoutchouc par rotation d'un rotor agencé sur un axe de la chambre de traitement.

18. Procédé selon les revendications 14 ou 15, le procédé étant exécuté par l'intermédiaire de la rotation de la chambre contenant les produits de caoutchouc.

19. Procédé selon les revendications 14 ou 15, dans lequel les produits de caoutchouc sont soumis à une déformation par suite de la compression et du déplacement entre deux ou plusieurs éléments du type d'une meule.
